# EUROPEAN PATENT SPECIFICATION

(11) **EP 3 696 035 B1**
(45) Date of publication and mention of the grant of the patent: **13.10.2021**
(21) Application number: 20156166.9
(22) Date of filing: 07.02.2020
(51) Int. Cl.: B60T 17/22, G01L 9/00

(54) **BRAKE PRESSURE SENSOR, SYSTEM AND METHOD FOR DETERMINATION OF BRAKING EFFICIENCY**
BREMSSYSTEMDRUCKSENSOR SYSTEM AND VERFAHREN ZUR ERMITTLUNG DER BREMSEFFIZIENZ
CAPTEUR DE PRESSION POUR SYSTÈME DE FREINAGE ET PROCÉDÉ DE DÉTÉRMINATION DE L'EFFICIENCE DE FREINAGE

(30) Priority: 12.02.2019 US 201916273506
(43) Date of publication of application: 19.08.2020
(73) Proprietor: The Goodyear Tire & Rubber Company, Akron, OH 44316 (US)
(72) Inventor: WIESEN, Guy, L-9186 Stegen (LU); HARTIKAINEN, Lassi Mikael, L-1128 Luxembourg (LU)
(74) Representative: Kutsch, Bernd

(56) References cited:
- EP-A1- 1 363 116
- EP-A2- 0 867 704
- WO-A1-01/90577
- FR-A1- 2 266 878
- US-A- 2 752 558
- US-A1- 2002 151 838
- US-A1- 2017 044 891

## Description

### Field of the Invention

The invention relates to the determination of braking efficiency of an anti-lock braking system for a vehicle that is equipped with tires. Specifically, the invention is directed to a sensor for measuring brake pressure in an anti-lock braking system in an accurate and efficient manner, which enables the braking efficiency associated with the tires to be determined. Documents US 2 752 558 A and US 2017/044891 A1 disclose state of the art pressure gauges for hoses.

### Background of the Invention

A tire is a critical component of a vehicle, as the tire contacts the road and transmits forces that drive the vehicle and stop the vehicle. The ability of the tire to stop the vehicle during braking is a significant factor in the design of any tire. As such, it is desirable to optimize the design of a tire in order to enable the tire to slow and/or stop the vehicle in an effective manner during braking. An indicator of the ability of a particular tire to slow and/or stop the vehicle during braking is the braking efficiency of the tire, which is the ratio between the actual braking performance or vehicle deceleration and the highest possible braking performance as dictated by the maximum grip between the tire and the road. Therefore, during the design and/or development of a tire, it is desirable to determine the braking efficiency of the tire.

In order to determine the braking efficiency of a tire, the pressure of each brake on the vehicle must be obtained as the vehicle executes braking maneuvers while equipped with the tires. In vehicles that include anti-lock braking systems or devices (ABS), the value that is needed is the ABS brake pressure, which enables the determination of ABS braking efficiency. ABS may include brake systems that employ disc brakes or drum brakes, as well as brake systems that are hydraulically actuated or pneumatically actuated. Reference herein shall be made to a hydraulically-actuated disc brake ABS by way of example, with the understanding that the invention also applies to ABS that include drum brakes and pneumatical actuation.

For example, when tires are developed for a consumer vehicle such as a car, the vehicle typically is equipped with four tires that are each mounted on a respective wheel. The ABS is a central system that is actuated by the vehicle brake pedal and includes hydraulic lines or hoses which transmit hydraulic pressure to a caliper or unit at each wheel. The vehicle executes braking maneuvers and the pressure of each ABS brake unit must be obtained. The respective ABS brake pressure values are used to determine the ABS braking efficiency, which provides an indication of the effectiveness of each tire during braking.

Therefore, obtaining an accurate and real-time value of the ABS brake pressure for each respective brake unit is important. In the prior art, sensors have been employed that are in fluid communication with the hydraulic brake circuit of each ABS unit. Such sensors measure the ABS brake pressure and generate a signal corresponding to the brake pressure, which is then used to determine the ABS braking efficiency.

However, installing such prior art pressure sensors requires opening the hydraulic brake circuit, installing each pressure sensor and bleeding the system. Such installation is time consuming and costly and undesirably involves disturbing the hydraulic circuit. In addition, prior art sensors require installation near the ABS unit brake caliper, which is in a confined space adjacent the wheel. The confined space limits wheel sizes that can be used in association with the sensor and may lead to sensor damage due to potential contact with the wheel.

As a result, it is desirable to develop an economical, easy-to-install sensor that is not disposed adjacent the wheel and which provides an accurate signal corresponding to the ABS brake pressure to enable the ABS braking efficiency associated with the tires to be determined.

### Summary of the Invention

The invention relates to a sensor in accordance with claim 1, to a system in accordance with claim 8, to a method in accordance with claim 14 and to a use of the system in accordance with claim 13.

Dependent claims refer to preferred embodiments of the invention.

According to an aspect of a preferred embodiment of the invention, a brake pressure sensor is provided. The brake pressure sensor includes a body, which in turn includes a first half and a second half. The first half of the body includes an inner surface and an outer surface, and a semi-circular recess is being formed on the first half inner surface. The second half of the body includes an inner surface and an outer surface, and a semi-circular recess is formed on the second half inner surface. A circular opening is formed by alignment of the recess of the first half of the body with the recess of the second half of the body. The body engages an exterior of a hose of a brake unit of an anti-lock braking system by receiving the hose in the circular opening and a strain gauge is attached to the outer surface of the first half of the body. As the anti-lock braking system is actuated and a pressure inside the hose increases, a diameter of the hose increases, creating increased strain in the body that is measured by the strain gauge.

According to an aspect of another preferred embodiment of the invention, a brake pressure sensor for determination of braking efficiency is provided. The brake pressure sensor includes a body, which in turn includes a first half and a second half. The first half of the body includes an inner surface and an outer surface, and a semi-circular recess is being formed on the first half inner surface. The second half of the body includes an inner surface and an outer surface, and a semi-circular recess is formed on the second half inner surface. A circular opening is formed by alignment of the recess of the first half of the body with the recess of the second half of the body. The body engages an exterior of a hose of a brake unit of an anti-lock braking system by receiving the hose in the circular opening and a strain gauge is attached to the outer surface of the first half of the body. As the anti-lock braking system is actuated and a pressure inside the hose increases, a diameter of the hose increases, creating increased strain in the body that is measured by the strain gauge. Data from the strain gauge is input into an ABS braking efficiency calculation.

According to an aspect of another preferred embodiment of the invention, a system is provided comprising: a brake pressure sensor, an anti-lock braking device comprising a brake unit and a hose of the brake unit. The body engages an exterior of the hose by receiving the hose in the preferably circular opening. The system is configured such that as the anti-lock braking device is actuated and a pressure inside the hose increases, a diameter of the hose increases, creating increased strain in the body that is measured by the strain gauge.

The brake pressure sensor in accordance with the invention or the system in accordance with the invention may be used to determine or calculate of the braking efficiency of an ABS system. The result of this determination or calculation may then be used to change or optimize the braking efficiency of an ABS system. This can lead to an increased performance of the ABS system and allows in particular an adaptation of the ABS system or the ABS system parameters (such as the braking pressure) to the tires mounted on the respective vehicle.

According to an aspect of another preferred embodiment of the invention, a method of determining or calculating the braking efficiency of an ABS system is disclosed. The method comprises: measuring an increase in diameter of a hose of an anti-lock braking device when the anti-lock braking device is actuated by using a strain gauge, preferably by using a system as described above; inputting data from the strain gauge, preferably a digital pressure signal, into an ABS braking efficiency calculation; and determining or calculating the braking efficiency of the ABS system. The result of this determination or calculation may then again be used to change or optimize the braking efficiency of an ABS system. This can lead to an increased performance of the ABS system and allows in particular an adaptation of the ABS system or the ABS system parameters (such as the braking pressure) to the tires mounted on the respective vehicle. Accordingly, a preferred aspect of this method includes optimizing the braking efficiency of the ABS system by adjusting the pressure inside the hose preferably also taking the tires mounted on the respective vehicle into account.

### Brief Description of Drawings

The invention will be described by way of example and with reference to the accompanying drawings, in which:
Figure 1 is a perspective view of a portion of an ABS unit disposed on a wheel of a vehicle and equipped with a prior art brake pressure sensor and an exemplary embodiment of the brake pressure sensor of the present invention;
Figure 2 is a perspective view of a prior art brake pressure sensor;
Figure 3 is an enlarged perspective view of the exemplary embodiment of the brake pressure sensor of the present invention installed on a hose of an ABS unit;
Figure 4 is a perspective view of the brake pressure sensor shown in Figure 3 without encapsulation and without installation on the hose of the ABS unit;
Figure 5 is a perspective view of the brake pressure sensor shown in Figure 3 without installation on the hose of the ABS unit;
Figure 6 is a front elevational view, shown partially in cross-section, of a portion of an exemplary embodiment of the brake pressure sensor of the present invention;
Figure 7 is a side elevational view of the brake pressure sensor shown in Figure 6;
Figure 8 is a schematic representation of the signal acquired by the exemplary embodiment of the brake pressure sensor of the present invention and determination of ABS braking efficiency associated with the tires of the vehicle;
Figure 9 is a graphical representation of a signal of an exemplary embodiment of the brake pressure sensor of the present invention compared to a direct measurement of hydraulic pressure of an ABS unit; and
Figure 10 is graphical representation of signal linearity of an exemplary embodiment of the brake pressure sensor of the present invention.

Similar numerals refer to similar parts throughout the drawings.

### Detailed Description of Example Embodiments of the Invention

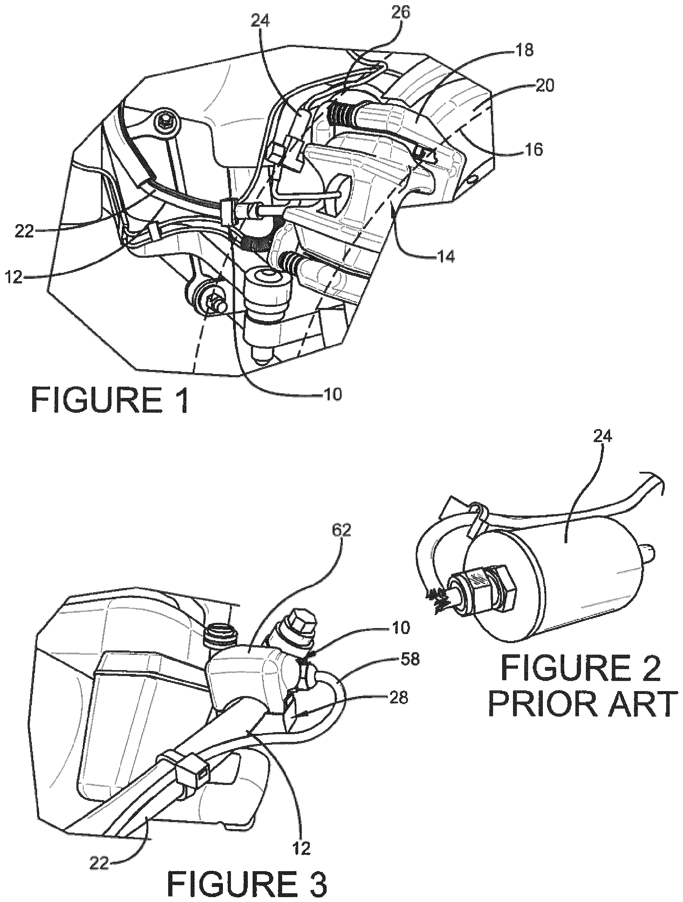

A first exemplary embodiment of the brake pressure sensor of the present invention and the environment in which it operates is shown in Figure 1. The brake pressure sensor is indicated generally at 10. The sensor 10 is disposed on a hose 12 of an anti-lock braking system/device (ABS) 14. The ABS 14 is a central system that is actuated by the vehicle brake pedal (not shown) and includes hydraulic lines or hoses, such as the hose 12, which transmit hydraulic pressure to a caliper or brake unit 18 at each specific wheel 16. As mentioned above, ABS may include brake systems that employ disc brakes or drum brakes, as well as brake systems that are hydraulically actuated or pneumatically actuated. Reference herein shall be made to a hydraulically-actuated disc brake ABS 14 by way of example, with the understanding that the invention also applies to ABS that include drum brakes and pneumatical actuation.

As a hydraulically-actuated disc brake ABS 14, a unit 18 which applies force to stop rotation of the wheel 16 is a caliper that acts upon a disc 20, which is connected to the wheel. As is known to those skilled in the art, upon actuation of the vehicle brake, the caliper 18 acts upon the disc 20 to slow and stop rotation of the disc, which in turn slows and stops rotation of the wheel 16 and the tire that is mounted on the wheel. The hose 12 of the ABS 14 contains hydraulic fluid for actuation of the caliper 18. The pressure of the hydraulic fluid in the hose 12 may be referred to as the ABS brake pressure 22.

A prior art brake pressure sensor is shown by way of reference in Figures 1 and 2 and is indicated at 24. The prior art sensor 24 must be in fluid communication with the hydraulic system of the ABS 14, and more specifically, a hose 26 at the caliper 18. To install the prior art sensor 24, the hose 26 must undesirably be disconnected from the caliper 18. Once the prior art sensor 24 has been installed, the hose 26 must be reconnected and the hydraulic pressure of the ABS 14 bled. In addition, the prior art sensor 24 must be installed near the caliper 18, which is in a confined space near the wheel 16. Such a confined space limits the sizes of the wheels 16 that may be used with the prior art sensor 24 and exposes the sensor to potential damage from the wheel, as shown in Figure 2.

As illustrated in Figure 1, the sensor 10 of the invention is disposed on the hose 22 a distance away from the caliper 18 and the wheel 16. In addition, the sensor 10 is mounted on the exterior of the hose 22, which enables simple and easy installation. It is to be understood that a sensor 10 is disposed on the outer surface of a respective hose 12 for each specific wheel 16 so that there is one sensor for each braking unit or caliper 18. Reference shall be made herein to one sensor 10 for the purpose of convenience, with the understanding that there is one sensor for each braking unit or caliper 18 and thus each wheel 16 and tire.

Turning now to Figures 3 through 7, the sensor 10 includes a body 28, which in turn includes a first half 30 and a second half 32. The body 28 may be formed of any suitable rigid material that is also light in weight, and preferably is formed of aluminum or stainless steel. The first half 30 of the body 28 includes an inner surface 34 and an outer surface 36, and a semi-circular recess 38 is formed on the inner surface. The second half 32 of the body 28 also includes an inner surface 40 and an outer surface 42, and a semi-circular recess 44 is formed on the inner surface. The inner surface 40 of the body second half 32 faces the inner surface 34 of the body first half 30. In this manner, the recess 38 of the first half 30 of the body 28 aligns with the recess 44 of the second half 32 of the body to form a circular opening 46. The body 28 engages and clamps about the outer surface of the hose 12 by receiving the hose in the circular opening 46.

Aligned openings 48 are formed in the first half 30 and the second half 32 of the body 28, and the openings receive mechanical fasteners 50, such as bolts. The bolts 50 maintain the first half 30 and the second half 32 of the body 28 in alignment and enable the halves to be secured about the exterior of the hose 12. When bolts are employed, the fasteners 50 also include nuts 52. A nut 52 is disposed on each respective bolt 50 to secure the first half 30 and the second half 32 in engagement with the hose 12. The nuts 52 are secured to the bolts 50 at the outer surface 42 of the second half 32 of the body 28.

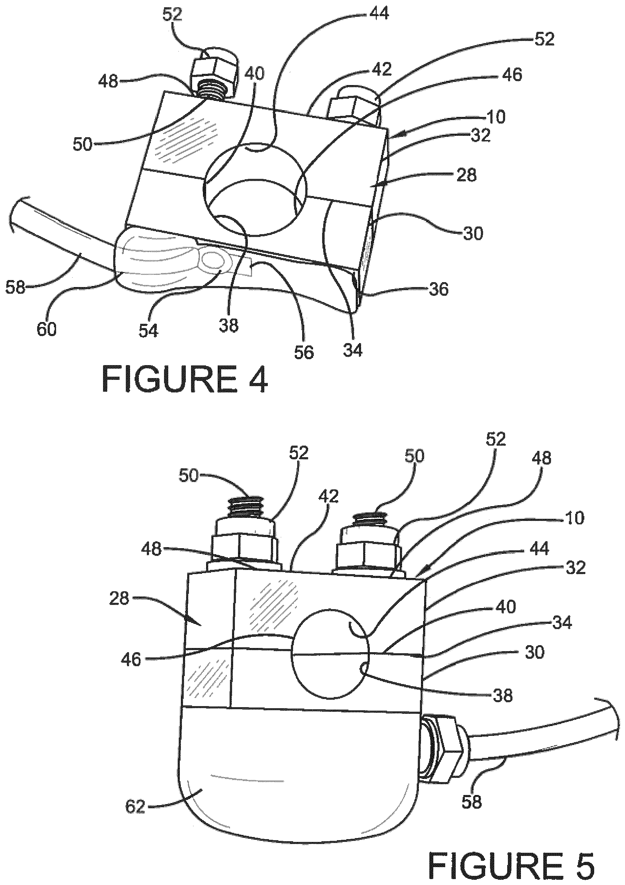

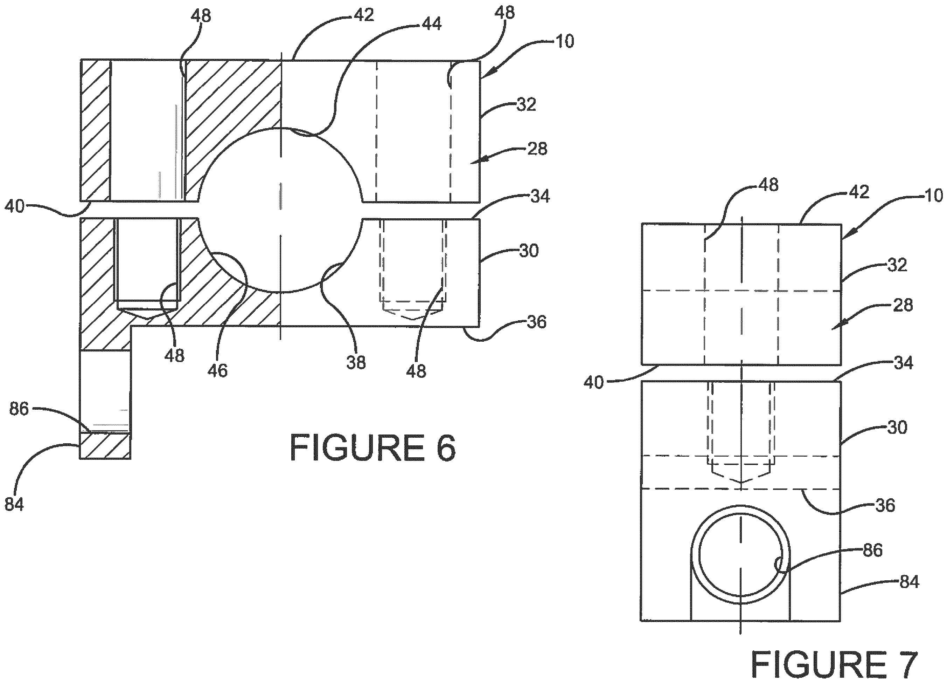

A strain gauge 54 is attached to the outer surface 36 of the first half 30 of the body 28 by an adhesive 56. A wire 58 is electronically connected to the strain gauge 54 at a connection point 60 to transmit the output of the strain gauge, as will be described in greater detail below. The connection point 60 may include an adhesive (Figure 4) that secures the wire 58 to the strain gauge 54 and the outer surface 36 of the first half of the body 30, and/or a lug 84 with an opening 86 (Figures 6 and 7) which enables the wire to be mechanically secured to the strain gauge and the outer surface of the first half of the body. The strain gauge 54 and the connection point 60 preferably are encased in a protective layer or housing 62, such as a silicone compound, to protect the gauge and the electronic connection.

As mentioned above, a respective sensor 10 is disposed on the outer surface of the hose 12 of the braking unit or caliper 18 for each specific wheel 16 and thus each tire. The circular opening 46 enables the first half 30 and the second half 32 of the body 28 to securely clamp around the circumference of the surface of the hose 12, and each half of the body remains in secure engagement with the hose through the use of the fasteners 50. As the ABS 14 is actuated, the hydraulic pressure inside the hose 12 increases. When the hydraulic pressure inside the hose 12 increases, the hose expands, causing the diameter of the hose to increase. Because the sensor 10 is rigidly clamped about the hose 12 and is fixed with the fasteners 50, the expansion of the hose creates increased strain in the body 28. Such increased strain is measured by the strain gauge 54 that is affixed to the outer surface 36 of the first half 30 of the body 28.

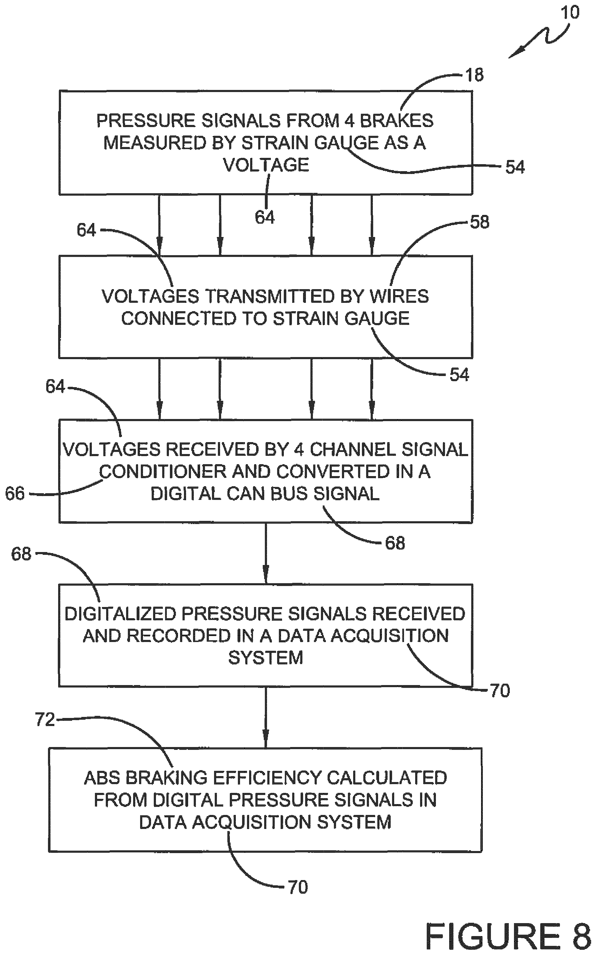

The strain on the sensor 10 is proportional to the pressure inside the hose 12, so that the strain indicated by the strain gauge 54 is proportional to the ABS brake pressure 22 (Figure 1). With additional reference now to Figure 8, to enable processing of the measurement of the strain gauge 54, the measurement is converted to a voltage 64 by the strain gauge. The wire 58 that is electronically connected to the strain gauge 54 transmits the measured voltage 64 to a signal conditioner 66, such as a four-channel signal conditioner. The measured voltage 64 is then converted into a digital controlled area network (CAN) bus signal or digital pressure signal 68 by the signal conditioner 66. The digital pressure signals 68 are received and recorded in a data acquisition system 70.

In this manner, real-time measured strain values that correspond to the ABS brake pressure 22 for each brake unit or caliper 18 are converted to a voltage 64 and converted into digital pressure signals 68, which are then logged and stored by the data acquisition system 70. The data acquisition system 70 may include a global positioning system (GPS) data logger and may also record and/or store other parameters relating to the vehicle and/or wheels 16, including vehicle speed, vehicle position, vehicle acceleration, wheel acceleration, individual wheel speeds, and the like.

The digital pressure signal data 68 is then used to determine the ABS braking efficiency 72. More particularly, the digital pressure signal data 68 is input from the data acquisition system 70 into a known ABS braking efficiency calculation. For example, many ABS brake efficiency calculations include dividing the total brake effort by the best effort of the vehicle driver, or the best theoretical braking effort, and multiplying the result by 100 to express the efficiency as a percentage. The digital pressure signal data 68 is indicative of or corresponds to the ABS brake effort in such a calculation.

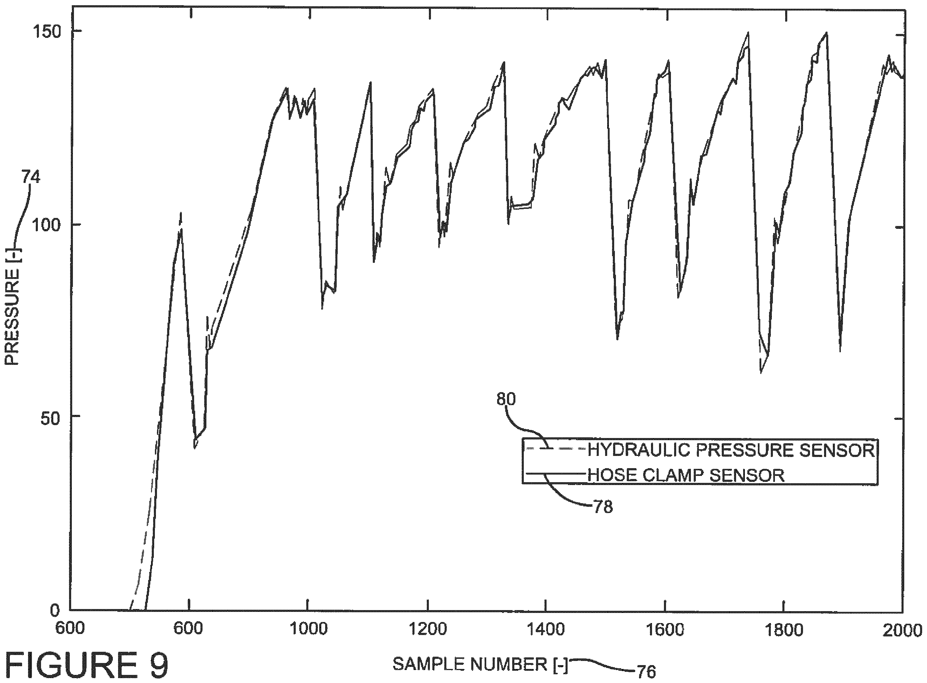

Referring now to Figure 9, the pressure sensor 10 was tested for accuracy. The ABS unit pressure, indicated at 74, was plotted or graphed over time 76. A pressure profile 78 generated by the pressure sensor 10 was compared to a direct measurement of the ABS pressure 80. The graph in Figure 9 shows that the ABS brake pressure profile 78 generated by the sensor 10 is accurate. In addition, the accuracy of the profile 78 generated by the sensor 10 may be further improved by adjusting the gain and offset of the signal, and/or by adjusting the temperature compensation of the strain gage 54 to match the material of the body 28.

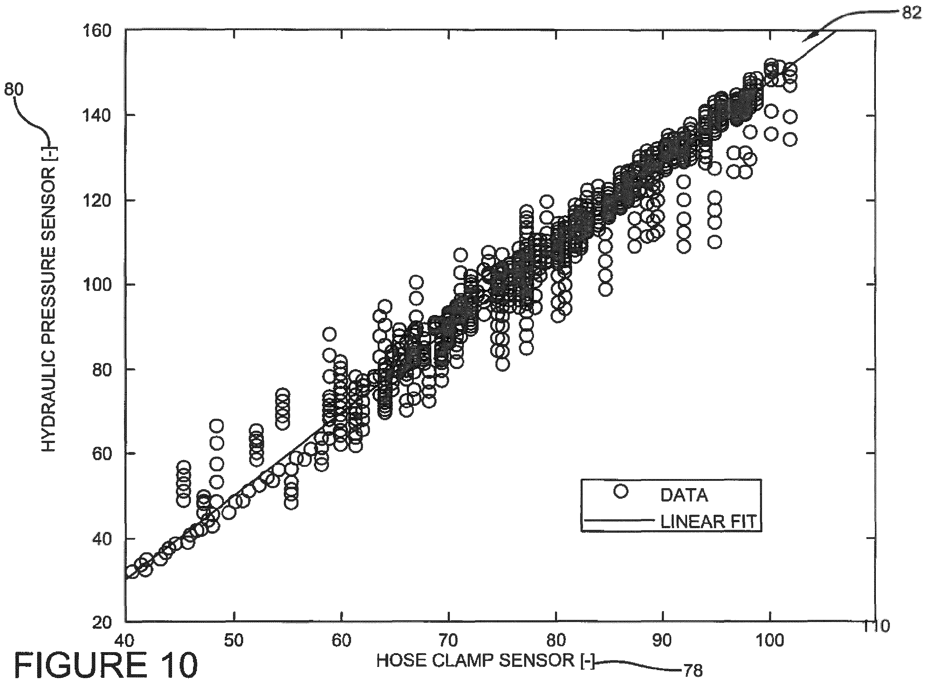

Turning to Figure 10, the signal linearity 82 of the pressure sensor 10 has been plotted. For the determination of ABS braking efficiency 72, the offset and linearity of the digital pressure signal 68 is important, while the absolute level, or gain, of the signal is not as important. The offset may be adjusted by evaluating the digital pressure signal 68 when the vehicle brake pedal is not actuated. In addition, the linearity versus hydraulic pressure signal is accurate, except for the first brake pressure ramp-up, which may be excluded from the ABS braking efficiency determination 72.

The sensor 10 of the invention thus includes simple, commonly available components, which can be configured as needed to match a target vehicle at a low cost and in a short amount of time. In addition, by being installed around the brake hose 12, the sensor 10 does not require the hydraulic circuit of the ABS 14 to be opened or disturbed. Moreover, because the sensor 10 is installed on the brake hose 12, instead of at or near the brake unit or caliper 18, the sensor does not limit the wheel sizes used and is not susceptible to damage due to contact with the wheel 16.

In this manner, the invention provides an economical, easy-to-install sensor 10 that is not disposed adjacent the wheel 16, and which provides an accurate signal 68 corresponding to the ABS brake pressure 22 to enable the ABS braking efficiency 72 associated with the tires to be determined.

The present invention also includes a method of measuring brake pressure to enable the determination of ABS braking efficiency for a tire. The method includes steps in accordance with the description that is presented above and shown in Figures 1 and 3 through 10.

It is to be understood that the structure of the above-described sensor 10 and associated determination of ABS braking efficiency may be altered or rearranged, or components or steps known to those skilled in the art omitted or added, without affecting the overall concept or operation of the invention. The invention may be employed in any ABS, including brake systems that employ disc brakes or drum brakes, as well as brake systems that are hydraulically actuated or pneumatically actuated. In addition, the principles of the invention find application in any vehicle category, such as passenger vehicles, commercial vehicles, off-the-road vehicles and the like.

## Claims

1. A brake pressure sensor, the sensor (10) comprising:
a body (28), the body including a first half (30) and a second half (32);
the first half (30) of the body (28) including an inner surface (34), an outer surface (36) and a preferably semi-circular recess (38) being formed on the first half inner surface (34);
the second half (32) of the body (28) including an inner surface (40), an outer surface (42) and a preferably semi-circular recess (44) being formed on the second half inner surface (40); **characterised by**
a preferably circular opening (46) formed by alignment of the recess (38) of the first half of the body with the recess (44) of the second half of the body; wherein the body (28) is configured for engaging an exterior of a hose (12) of a brake unit (18) of an anti-lock braking system (14) by receiving the hose (12) in the preferably circular opening (46); and
a strain gauge (54) being attached to the outer surface (36) of the first half (30) of the body (28).

2. The brake pressure sensor of claim 1, wherein the first half (30) and the second half (32) of the body (28) are formed with aligned openings (48) for receiving mechanical fasteners (50) such as bolts and/or nuts.

3. The brake pressure sensor of claim 1, wherein the first half (30) and the second half (32) of the body (28) are formed with aligned openings (48) and mechanical fasteners received therein, the mechanical fasteners being bolts (50) and nuts (52), wherein each nut (52) is secured to a respective bolt (50) at the outer surface (42) of the second half (32) of the body (28).

4. The brake pressure sensor of at least one of the previous claims, wherein the strain gauge (54) is attached to the outer surface (36) of the first half (30) of the body (28) by an adhesive (56).

5. The brake pressure sensor of at least one of the previous claims, wherein the strain gauge (54) is encased in a protective layer (62) or a housing, the protective layer (62) preferably including silicone.

6. The brake pressure sensor of at least one of the previous claims, further comprising means for converting a measurement of the strain gauge (54) to a voltage.

7. The brake pressure sensor of at least one of the previous claims, further comprising a wire (58) electronically connected to the strain gauge (54) and/or further comprising a signal conditioner (66), wherein the sensor (10) is configured such that the wire (58) can transmitting a voltage to the signal conditioner (66).

8. A system comprising:
a brake pressure sensor (10) in accordance with at least one of the previous claims;
an anti-lock braking device (14) comprising a brake unit (18); and
a hose (12) of the brake unit (18);
wherein the body (28) engages an exterior of the hose (12) by receiving the hose (12) in the preferably circular opening (46).

9. The system of claim 8 wherein the system is configured such that as the anti-lock braking device (14) is actuated and a pressure inside the hose (12) increases, a diameter of the hose (12) increases, creating increased strain in the body (28) that is measured by the strain gauge (54).

10. The system of claim 8 or 9 further comprising a data acquisition system (70) for recording a digital pressure signal (68) from the signal conditioner (66)

11. The system of claim 8, 9 or 10 comprising a plurality of brake pressure sensors (10), wherein each sensor (10) engages a hose (12) of a respective braking unit (18) of the anti-lock braking device (14).

12. The system of at least one of the claims 8 to 11 further comprising means such as a signal conditioner (66) for amplifying the voltage and/or further comprising a data acquisition system (70) for recording the digital pressure signal (68) from the signal conditioner (66).

13. Use of a brake pressure sensor (10) in accordance with at least one of the claims 1 to 7 or use of a system in accordance with at least one of the claims 8 to 12 in determination or calculation of the braking efficiency of an ABS (14) system.

14. A method of determining or calculating the braking efficiency of an ABS (14) system, the method comprising:
measuring an increase in diameter of a hose (12) of an anti-lock braking device (14) when the anti-lock braking device (14) is actuated by using a strain gauge (54), preferably by using a system in accordance with at least one of the claims 8 to 12;
inputting data from the strain gauge (54), preferably the digital pressure signal, into an ABS braking efficiency calculation; and
determining or calculating the braking efficiency of the ABS (14) system.

15. The method of claim 14 further comprising recording with the data acquisition system (70) at least one of vehicle speed, vehicle position, vehicle acceleration, wheel acceleration and individual wheel speeds; and/or optimizing the braking efficiency of the ABS (14) system by adjusting the pressure inside the hose (12).

## Patentansprüche

1. Bremsdrucksensor, wobei der Sensor (10) Folgendes umfasst:
einen Körper (28), wobei der Körper eine erste Hälfte (30) und eine zweite Hälfte (32) beinhaltet;
wobei die erste Hälfte (30) des Körpers (28) eine innere Oberfläche (34), eine äußere Oberfläche (36) und eine vorzugsweise halbkreisförmige Aussparung (38) beinhaltet, die auf der inneren Oberfläche der ersten Hälfte (34) ausgebildet ist;
wobei die zweite Hälfte (32) des Körpers (28) eine innere Oberfläche (40), eine äußere Oberfläche (42) und eine vorzugsweise halbkreisförmige Aussparung (44) beinhaltet, die auf der inneren Oberfläche der zweiten Hälfte (40) ausgebildet ist; **gekennzeichnet durch**
eine vorzugsweise kreisförmige Öffnung (46), die durch Ausrichtung der Aussparung (38) der ersten Hälfte des Körpers an der Aussparung (44) der zweiten Hälfte des Körpers ausgebildet ist; wobei der Körper (28) zum Ineingriffnehmen einer Außenseite eines Schlauches (12) einer Bremseinheit (18) eines Antiblockiersystems (14) durch Aufnehmen des Schlauches (12) in die vorzugsweise kreisförmige Öffnung (46) konfiguriert ist; und
einen Dehnungsmesser (54), der an der äußeren Oberfläche (36) der ersten Hälfte (30) des Körpers (28) angebracht ist.

2. Bremsdrucksensor nach Anspruch 1, wobei die erste Hälfte (30) und die zweite Hälfte (32) des Körpers (28) mit ausgerichteten Öffnungen (48) zum Aufnehmen mechanischer Befestigungselemente (50) wie etwa Schrauben und/oder Muttern ausgebildet sind.

3. Bremsdrucksensor nach Anspruch 1, wobei die erste Hälfte (30) und die zweite Hälfte (32) des Körpers (28) mit ausgerichteten Öffnungen (48) und darin aufgenommenen mechanischen Befestigungselementen ausgebildet sind, wobei die mechanischen Befestigungselemente Schrauben (50) und Muttern (52) sind, wobei jede Mutter (52) an einer jeweiligen Schraube (50) an der äußeren Oberfläche (42) der zweiten Hälfte (32) des Körpers (28) festgemacht ist.

4. Bremsdrucksensor nach wenigstens einem der vorhergehenden Ansprüche, wobei der Dehnungsmesser (54) durch einen Klebstoff (56) an der äußeren Oberfläche (36) der ersten Hälfte (30) des Körpers (28) angebracht ist.

5. Bremsdrucksensor nach wenigstens einem der vorhergehenden Ansprüche, wobei der Dehnungsmesser (54) in einer Schutzschicht (62) oder einem Gehäuse eingeschlossen ist, wobei die Schutzschicht (62) vorzugsweise Silikon beinhaltet.

6. Bremsdrucksensor nach wenigstens einem der vorhergehenden Ansprüche, der ferner ein Mittel zum Umwandeln einer Messung des Dehnungsmessers (54) in eine Spannung umfasst.

7. Bremsdrucksensor nach wenigstens einem der vorhergehenden Ansprüche, der ferner einen Draht (58) umfasst, der mit dem Dehnungsmesser (54) elektronisch verbunden ist, und/oder ferner einen Signalformer (66) umfasst, wobei der Sensor (10) derart konfiguriert ist, dass der Draht (58) eine Spannung an den Signalformer (66) übertragen kann.

8. System, das Folgendes umfasst:
einen Bremsdrucksensor (10) nach wenigstens einem der vorhergehenden Ansprüche;
eine Antiblockiervorrichtung (14), die eine Bremseinheit (18) umfasst; und
einen Schlauch (12) der Bremseinheit (18);
wobei der Körper (28) eine Außenseite des Schlauches (12) durch Aufnehmen des Schlauches (12) in die vorzugsweise kreisförmige Öffnung (46) in Eingriff nimmt.

9. System nach Anspruch 8, wobei das System derart konfiguriert ist, dass, weil die Antiblockiervorrichtung (14) betätigt wird und ein Druck innerhalb des Schlauches (12) steigt, ein Durchmesser des Schlauches (12) steigt, wobei eine gesteigerte Dehnung in dem Körper (28) erzeugt wird, die durch den Dehnungsmesser (54) gemessen wird.

10. System nach Anspruch 8 oder 9, das ferner ein Datenerfassungssystem (70) zum Aufzeichnen eines digitalen Drucksignals (68) von dem Signalformer (66) umfasst.

11. System nach Anspruch 8, 9 oder 10, das mehrere Bremsdrucksensoren (10) umfasst, wobei jeder Sensor (10) einen Schlauch (12) einer jeweiligen Bremseinheit (18) der Antiblockiervorrichtung (14) in Eingriff nimmt.

12. System nach wenigstens einem der Ansprüche 8 bis 11, das ferner ein Mittel wie etwa einen Signalformer (66) zum Verstärken der Spannung umfasst und/oder ferner ein Datenerfassungssystem (70) zum Aufzeichnen des digitalen Drucksignals (68) von dem Signalformer (66) umfasst.

13. Verwendung eines Bremsdrucksensors (10) nach wenigstens einem der Ansprüche 1 bis 7 oder Verwendung eines Systems nach wenigstens einem der Ansprüche 8 bis 12 für eine Bestimmung oder eine Berechnung der Bremswirkung eines ABS(14)-Systems.

14. Verfahren zum Bestimmen oder Berechnen der Bremswirkung eines ABS(14)-Systems, wobei das Verfahren Folgendes umfasst:
Messen einer Steigerung des Durchmessers eines Schlauches (12) einer Antiblockiervorrichtung (14), wenn die Antiblockiervorrichtung (14) betätigt wird, durch Verwenden eines Dehnungsmessers (54), vorzugsweise durch Verwenden eines Systems nach wenigstens einem der Ansprüche 8 bis 12;
Eingeben von Daten von dem Dehnungsmesser (54), vorzugsweise des digitalen Drucksignals, in eine ABS-Bremswirkungsberechnung; und
Bestimmen oder Berechnen der Bremswirkung des ABS(14)-Systems.

15. Verfahren nach Anspruch 14, das ferner das Aufzeichnen von Fahrzeuggeschwindigkeit, Fahrzeugposition, Fahrzeugbeschleunigung, Radbeschleunigung und/oder Einzelradgeschwindigkeiten mit dem Datenerfassungssystem (70); und/oder ein Optimieren der Bremswirkung des ABS(14)-Systems durch Einstellen des Drucks innerhalb des Schlauches (12) umfasst.

## Revendications

1. Capteur de la pression de freinage, le capteur (10) comprenant :
un corps (28), le corps englobant une première moitié (30) et une deuxième moitié (32) ;
la première moitié (30) du corps (28) englobant une surface interne (34), une surface externe (36) et un évidement de préférence de forme semi-circulaire (38) qui est pratiqué dans la surface interne (34) de la première moitié ;
la deuxième moitié (32) du corps (28) englobant une surface interne (40), une surface externe (42) et un évidement de préférence de forme semi-circulaire (44) qui est pratiqué dans la surface interne (40) de la deuxième moitié ;
**caractérisé par**
une ouverture (46) de préférence de forme circulaire que l'on obtient par la mise en alignement de l'évidement (38) de la première moitié du corps avec l'évidement (44) de la deuxième moitié du corps ; dans lequel le corps (28) est configuré pour une mise en contact avec un côté externe d'un tuyau flexible (12) d'une unité de freinage (18) d'un système de freinage (14) de type antiblocage par le fait que le tuyau flexible (12) vient se loger dans l'ouverture (46) de préférence de forme circulaire ; et
une jauge de contrainte (54) qui est fixée à la surface externe (36) de la première moitié (30) du corps (28).

2. Capteur de la pression de freinage selon la revendication 1, dans lequel la première moitié (30) et la deuxième moitié (32) du corps (28) sont réalisées avec des ouvertures (48) qui ont été mises en alignement, dans lesquelles doivent venir se loger des dispositifs de fixation mécaniques (50) tels que des boulons et/ou des écrous.

3. Capteur de la pression de freinage selon la revendication 1, dans lequel la première moitié (30) et la deuxième moitié (32) du corps (28) sont réalisées avec des ouvertures (48) qui ont été mises en alignement et avec des dispositifs de fixation mécaniques qui y sont logés, les dispositifs de fixation mécaniques représentant des boulons (50) et des écrous (52) ; dans lequel chaque écrou (52) est fixé à un boulon respectif (50) à la surface externe (42) de la deuxième moitié (32) du corps (28).

4. Capteur de la pression de freinage selon au moins une des revendications précédentes, dans lequel la jauge de contrainte (54) est fixée à la surface externe (36) de la première moitié (30) du corps (28) par l'intermédiaire d'un adhésif (56).

5. Capteur de la pression de freinage selon au moins une des revendications précédentes, dans lequel la jauge de contrainte (54) est encastrée dans une couche de protection (62) ou dans un logement, la couche de protection (62) englobant de préférence de la silicone.

6. Capteur de la pression de freinage selon au moins une des revendications précédentes, qui comprend en outre un moyen qui est destiné à convertir une mesure de la jauge de contrainte (54) en une tension.

7. Capteur de la pression de freinage selon au moins une des revendications précédentes, qui comprend en outre un fil métallique (58) qui est relié par voie électronique à la jauge de contrainte (54) ; et/ou qui comprend en outre un conditionneur de signaux (66) ; dans lequel le capteur (10) est configuré d'une manière telle que le fil métallique (58) peut transmettre une tension au conditionneur de signaux (66).

8. Système qui comprend :
un capteur de la pression de freinage (10) en conformité avec au moins une des revendications précédentes ;
un dispositif de freinage (14) de type antiblocage qui comprend une unité de freinage (18) ; et
un tuyau flexible (12) de l'unité de freinage (18) ;
dans lequel le corps (28) entre en contact avec une face externe du tuyau flexible (12) par le fait que le tuyau flexible (12) vient se loger dans l'ouverture (46) de préférence de forme circulaire.

9. Système selon la revendication 8, dans lequel le système est configuré d'une manière telle que, lorsque le dispositif de freinage (14) de type antiblocage est activé et lorsqu'une pression qui règne à l'intérieur du tuyau flexible (12) augmente, un diamètre du tuyau flexible (12) augmente, ce qui génère une augmentation de la contrainte dans le corps (28), qui est mesurée par la jauge de contrainte (54).

10. Système selon la revendication 8 ou 9, qui comprend en outre un système d'acquisition de données (70) qui est destiné à enregistrer un signal numérique de pression (68) émis par le conditionneur de signaux (66).

11. Système selon la revendication 8, 9 ou 10, qui comprend un certain nombre de capteurs de la pression de freinage (10) ; dans lequel chaque capteur (10) entre en contact avec un tuyau flexible (12) d'une unité de freinage respective (18) du dispositif de freinage (14) de type antiblocage.

12. Selon au moins une des revendications 8 à 11, qui comprend en outre un moyen tel qu'un conditionneur de signaux (66) qui est destiné à amplifier la tension et/ou qui comprend en outre un système d'acquisition de données (70) qui est destiné à enregistrer le signal de pression numérique (68) émis par le conditionneur de signaux (66).

13. Utilisation d'un capteur de la pression de freinage (10) en conformité avec au moins une des revendications 1 à 7 ou utilisation d'un système en conformité avec au moins une des revendications 8 à 12 dans la détermination ou dans le calcul de l'efficacité de freinage d'un système ABS (14).

14. Procédé destiné à déterminer ou à calculer l'efficacité de freinage d'un système ABS (14), le procédé comprenant le fait de :
mesurer une augmentation du diamètre d'un tuyau flexible (12) d'un dispositif de freinage (14) de type antiblocage lorsque le dispositif de freinage (14) de type antiblocage est activé en utilisant une jauge de contrainte (54), de préférence en utilisant un système en conformité avec au moins une des revendications 8 à 12 ;
entrer des données émises par la jauge de contrainte (54), de préférence le signal de pression numérique, dans un calcul de l'efficacité de freinage du système ABS ; et
déterminer ou calculer l'efficacité de freinage du système ABS (14).

15. Procédé selon la revendication 14, qui comprend en outre le fait d'enregistrer, avec le système d'acquisition de données (70), au moins une donnée qui est choisie parmi la vitesse du véhicule, la position du véhicule, l'accélération du véhicule, l'accélération des roues et les vitesses des roues individuelles; et/ou le fait d'optimiser l'efficacité de freinage du système ABS (14) en réglant la pression qui règne à l'intérieur du tuyau flexible (12).
